Europäisches Patentamt

European Patent Office

Office européen des brevets

(11) Publication number: **0 034 146**

**B1**

(12) **EUROPEAN PATENT SPECIFICATION**

(45) Date of publication of patent specification: **12.03.86**

(51) Int. Cl.⁴: **F 24 D 5/10**

(21) Application number: **80900735.4**

(22) Date of filing: **10.04.80**

(86) International application number:
**PCT/SE80/00102**

(87) International publication number:
**WO 80/02190 16.10.80 Gazette 80/23**

(54) METHOD AND ARRANGEMENT FOR HEAT CONDITIONING OF BUILDINGS.

(30) Priority: **11.04.79 SE 7903251**
**03.03.80 SE 8001647**

(43) Date of publication of application:
**26.08.81 Bulletin 81/34**

(45) Publication of the grant of the patent:
**12.03.86 Bulletin 86/11**

(84) Designated Contracting States:
**DE FR GB**

(56) References cited:
**FI-C- 55 404**
**FI-C- 56 746**
**FR-A-2 319 855**
**US-A-1 228 931**
**US-A-1 542 178**
**US-A-2 530 940**

(73) Proprietor: **AEROMATOR TRADING COMPANY AB**
**Birger Jarlsgatan 15**
**S-111 45 Stockholm (SE)**

(72) Inventor: **SKOGSTRÖM, Lars**
**Oxelvägen 37**
**S-130 12 Älta (SE)**
Inventor: **BERGQVIST, Bengt**
**Nybrogatan 87**
**S-11441 Stockholm (SE)**

(74) Representative: **Billberg, Hans et al**
**JACOBSSON & BILLBERG PATENTBYRA AB Box 21113**
**S-100 31 Stockholm 21 (SE)**

Courier Press, Leamington Spa, England.

## Description

The invention relates to a method and arrangement for heat conditioning completely or partly of a region in a building having a roof construction, through which air is passed between the outside environment and the region so that the roof construction works as regenerative heat exchangers by that the used air, before being discharged to the environment, is passed from the region through the roof construction for a first predetermined period of time for transfer of heat of the air leaving the region to the roof construction and by that the flow of air is reversed to be passed from the outside environment through the roof construction to the region for a second predetermined period of time to thereby transfer the heat of the roof construction to the air entering the region.

The object of the invention is to make use of the air, which in the locality has been heated by the people and/or machines and also illuminations being placed in the locality, but which air for the rest is used up and must be ventilated away. By the invention it is also possible to make use of the heat rising upwards the ceiling of a locality and which heat otherwise will escape in the form of heat losses through the roof or must be ventilated away. A further advantage of the invention is to take care of the heat produced by the sunshine against the outside of the roof. According to the invention not only heated air is inserted in the locality but also fresh air and a continuous exchange of air is attained in the locality without draught or other inconveniences.

The Finnish Patent 55 404 describes a method for heat conditioning of a building, according to which method the insulating layer of the roof is caused to work as a regenerative heat exchanger by that the air is passed through the insulating layer from the environment and into the building during a first pretermined period of time and in the opposite direction during a second period of time. Thus, the direction of the flow of air is alternated regularly. However, this known method is hardly useful in practice. This is due to the fact that the insulating layer has a very small capacity of accumulating heat and during the wintertime, the insulation will be wet due to condensing when the air is passed from the building and outwards to the environment. When the direction of flow then is reversed, the cold air will freeze the water to ice. The forming of ice will lead to that the pressure drop for the air passing through the insulation layer will vary and this will make it difficult to control the heat conditioning. Also, the heat insulating layer has a tendency to accumulate dirt and other particles which are in the air. This will also affect the pressure drop of the air.

The Finnish Patent 56 746 describes a method of heat conditioning buildings, in which method the great capacity of accumulating heat of concrete elements is used. However, the concrete elements are not used as regenerative heat exchangers as our invention discloses.

The object of the invention is to eliminate the draw-backs mentioned above and to improve the method of using the roof construction as a regenerative heat exchanger.

The invention is thereby characterized in that the air, when passing through the slab like elements, is passed through a number of parallel channels, which are formed in slab like elements of concrete and that, at least when the flow of air is from the outside environment into the region, the air before being conducted into the channels is passed through a narrow space, which is formed between a covering layer and an insulation upon the slab like elements, whereby the amount of air in the locality is balanced during the alternating periods.

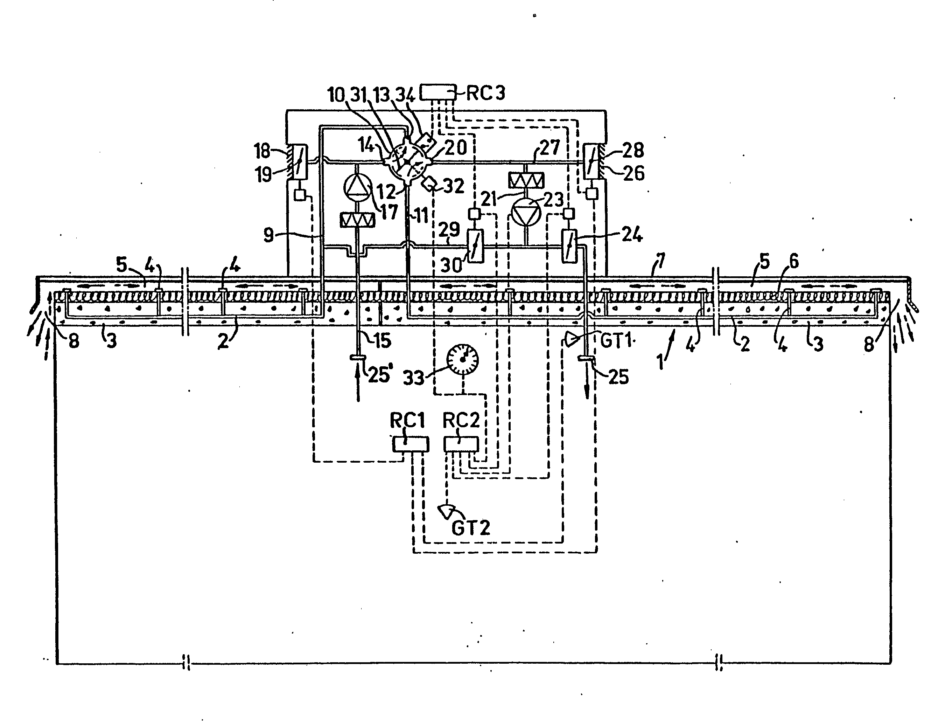

An embodiment of the invention will now be described with reference to the accompanying drawing. The figure thereby is a section through a frame-work and the regulating means for carrying out the invention according to the embodiment.

The figure illustrates a principal drawing and a section through the roof construction including the regulating means. It should be understood that a locality is placed under the roof construction.

The roof construction over the locality includes a floor frame-work 3 of concrete having channels 2, known per se. The channels 2 are distributed along the section with suitable distance between each other. At suitable intervals branch channels 4 are leading upwards from the channels 2 to a narrow space 5 between an insulation 6 on the framework 3 and a covering layer 7. The roof construction is thus including the covering layer 7, the narrow space 5, the insulation 6 and the frame-work 3. The frame-work 3 is self-supporting and consists preferably of slabs having supporting beams or flanges (not shown).

Air exchanging to and from the narrow space 5 is performed via openings 8 at the eaves. Air can thus pass from the environment through the openings 8, through the narrow space 5, down through the branch channels 4, through the channels 2 and further on to a piping being described in the following.

As can be seen the left part of the roof is identical with the right part. Channels 2 of the left part of the roof are leading via a common collecting main 9 to a four-way valve 10. The channels 2 of the right part are also leading via a second common collecting main 11 to said four-way valve 10. The second collecting main 11 is connected to the four-way valve 10 at a port 12, which is placed opposite to a port 13, to which the first collecting main 9 is connected. The four-way valve 10 has a third port 14 which is connected to the locality via an exhausting pipe 15 and an exhausting means 25. An intake 18 from the environment having a damper 19 is also connected to the port 14. A fourth port 20 is connected to an inlet pipe 21, which is opening in the locality via an air conditioning means 22, a fan 23 and a valve 24 at 25. An intake 26 from the environment is also connected to the port 20 via a pipe 27 and a damper 28. The pipe 21 is connected to the collecting mains 11 and 9 via a branching pipe 29 and a valve 30.

The four-way valve 10 includes a valve housing which has a circular section and which contains a rotatable flap 31 driven by an engine, see block symbol 32, a timing relay 33 regulating the engine 32 and thus the rotating of the flap 31 so that it can occupy different positions during certain periods of time in order to make a connection between adjacent ports 12 and 20 or 13 and 14 or closing the connection between opposite ports 14 and 20 or 12 and 13. The flap 31 can be driven intermittently or slowly when carrying out these connections. The procedure will be described more in the following.

The timer 33 is connected to a regulating box RC2 and moreover there are two regulating panels RC1 and RC3. The regulating panel RC1 is thus regulating the dampers 19 and 28 and is sensing the temperature in the opening 25 of the inlet pipe 21. The regulating box RC2 is regulating, besides the timer 33, also the valve 30, the fan 23 and the valve 24. The regulating panel RC3 is regulating the valves 30 and 24 and also the damper 28. Moreover the regulating panel RC3 is sensing the difference of the pressure at both sides of the flap 31 for its different positions.

The main object of the invention is to regulate the current or air through the right part and the left part of the roof by means of the four-way valve 10, that is to say the air shall pass through the channels so that the roof construction acts as a regenerative heat exchanger. During a first period of time fresh air is sucked through the openings 8 and into the channels 2 via the branch channels 4. Before that, the air has passed through the narrow space 5 between the covering layer 7 and the insulation 6, this according to the shown embodiment. After that the air has passed the channels 2 and the air is collected in the collecting main 11 and will reach the four-way valve 10 via the port 12. The flap 31 has such a position, that the air is directed to the right in the Figure by means of the sucking effect of the fan 23. The damper 28 is closed, and so is the valve 30 while the valve 24 is open, whereby air will pass into the locality via the opening 25. During the same period of time heated air is sucked from the locality via the exhausting pipe 15 by means of the fan 17 and this heated air is passed on to the port 14 of the four-way valve 10. The damper 19 is closed. The air is, because of the position of the flap 31, passed to the port 13 and out through the collecting main 9 and further on to the openings 8 via channels 2, the branching channels 4 and the narrow space 5 of the left part of the roof. Because of the heat contents of this air, heat will be accumulated in the frame-work 3, that is to say in the concrete slabs 3. The first period of time is now closed and the second period of time, which may last e.g. 30 minutes will now start. The flap 31 is now changing positions and will be rotated 90° clockwise to the position which is shown in the figure with dashed lines. It is hereby understood, that the warm air which is passed through the exhaust pipe 15 will escape through port 12 and out through the collecting main 11 and further on to channels 2 of the right part of the roof construction. In the corresponding manner the fan 23, instead of sucking air from the main 11, will suck air from the collecting main 9 via the ports 13 and 20. The heat contents which ealier has been accumulated in the left part of the roof construction will hereby be absorbed by the fresh air, which is sucked into the roof construction and will be passed on into the locality via the opening 25. At the same time the used air in the locality will be passed out from the locality through the right part of the roof construction via the exhaust pipe 15 and will hereby heat this part of the roof construction. As mentioned above, this period of time may be 30 minutes, whereafter the flap 31 once again will change positions and hereby the direction of the air current. It is hereby understood that the two parts of the roof construction alternatively will be heated and will be cooled. In order to balance the amount of air in the locality the amount of air, which is sucked out is the same as the amount of air which is sucked into the roof construction and this is because the roof construction is divided into two similar parts. Besides that the roof construction in this way is heated and that this heat will be transmitted to the fresh air, which after that is passed in the locality so it is possible to use the transmission heat from the locality to the roof construction and also the heat of the sun can be absorbed by the roof construction.

The air, which is sucked from the locality may be dirty and will contaminate the channels 2. A purification blowing of the channels and also of the narrow space can be carried out. This blowing will be performed in that the flap 31 is rotated slowly so that the ports are passed during a certain delay. Thus, all ports 12, 13, 14 and 20 are, during this period of time, closed from each other. A pressure sensing means is placed at 34. This sensing means will sense the pressure rise over the flap and will open the damper 28 and valve 30 by the regulating panel RC3 and simultaneously the valve 24 will be closed. The fan 23 will now blow the channels 2 of the left side in that fresh air is sucked from the environment through the inlet 26 and is passed through the opened valve 30 and to the collecting main 9 and collecting main 11. Also the branch channels 4 and the narrow space 5 of the left side are blown. This blowing may be carried out for say 2 minutes, but it should be understood that this time can be shortened or prolonged by regulating the rotating speed of the flap. However, the pressure will decrease when the flap is passing the ports 12 and 20 and the pressure sensing means will give a signal to the regulating panel RC3, whereby the damper 28 and valve 30 are closed and the valve 24 is opened. After the blowing the procedure described above concerning the air through the channels can be started again. The right side will be blown in a corresponding way by means of a valve and a branch line (not shown) from the pipe 29.

If the temperature of the fresh air to the locality will be too high, e.g. during autumn and spring, the thermostat GT1 will react and deliver a signal to the regulating panel RC1 regulating the dampers 19 and 28 so that fresh air is supplied and mixed with the air passing through the channels.

The dampers 19 and 28 are open during summer time. If the temperature in the locality is too high, the temperature sensor GT2 will react and deliver a signal to the regulating box RC2 so that the flap 31 will occupy a position, in which the ports 14 and 20 are closed. At the same time the valve 30 is opened and the fan 23 is running. Fresh air will now be sucked through the damper 28 and will be passed to the locality through the opening 25 via the valve 24 and to the channels 2 via the valve 30. The channels 2 will hereby be cooled and will lead away the transmission heat from the roof construction. The roof will hereby also act as a cooler of radiated heat.

The operation according to the invention also means, that at least some times the channels during a short period of time are passed by fresh air, which is sucked from the environment and will be delivered to the environment in order to clean the inner sides of the channels from dirt, which can come from the locality with the air.

It is possible to vary the operation of the invention. It has been mentioned above that channels 2 may be connected in parallel or combination of parallel and in series or only in series. It should also be observed, that the invention has been described in connection with two separate roof parts. However, it is possible to work the invention only using one and the same part in order to alternatively insert fresh air and remove the used air. It shall also be noted, that according to the invention the air pressure in the locality is kept equal by that the elements are divided into two similar parts, so that the same amount of air is inserted into the locality as being removed. Within the scope of the invention there are other ways of balancing the amount of air in the locality, for instance by inserting air directly or removing air directly, whereby the inserting of fresh air for instance may be performed by a conventional heating means.

## Claims

1. Method for heat conditioning completely or partly of a region in a building having a roof of slab like elements, through which elements air is passed between the outside environment and the region so that the slab like elements are working as regenerative heat exchangers by that the used air, before being discharged to the environment, is passed from the region through the slab like elements for a first predetermined period of time for transfer of heat of the air leaving the region to the slab like elements and by that the flow of air is reversed to be passed from the outside environment through the slab like elements to the region for a second predetermined period of time to thereby transfer the heat of the slab like elements to the air entering the region, characterized in that the air, when passing through the slab like elements, is passed through a number of parallel channels (2) which are formed in the slab like elements of concrete and that, when the flow of air is from the outside environment into the region, the air before being conducted into the channels is passed through a narrow space (5), which is formed between a covering layer (7) and an insulation (6) upon the slab like elements, whereby the amount of air in the locality is balanced during the alternating periods.

2. Method according to claim 1, characterized in that the flow of air is divided so that when air is passed from the interior of said region and out of it through the channels of a certain part of the roof construction (1), air is simultaneously passed from the environment and into the region through the channels of a second part of said roof construction, which is as large as said first part of the roof construction.

3. Method according to claim 1 or 2, characterized in that besides the period of time for passing away the used air and the period of time for passing air from the environment, the channels (2) during a certain short period of time are passed by fresh air, which is sucked from the environment and is delivered to the environment in order to clean the channels from dirt, which may accompany the air from the region during said first mentioned period of time.

4. Method according to any of the preceding claims, characterized in that when passing air into the locality through the channels, air is also passed directly from the environment to be mixed with the air passing through the channels before this air is passed into the region.

5. Arrangement for heat conditioning completely or partly of a region of a building having a roof construction (1) through which air is passed between the outside environment and the region in alternating opposite directions so that the roof is working as a regenerative heat exchanger according to claim 1, characterized in that the roof construction (1) comprises, known per se, a narrow space (5) between an outer covering layer (7) and an insulation (6) on the roof construction, which narrow space (5) in one end is connected to the outside environment, the roof construction also comprises, known per se, a number of parallel channels (2) formed in frame-work elements of concrete for conducting the flow of air, which channels (2) are connected to the region via exhausting pipes (15, 21), of which a first one (15) includes a first fan (17) sucking air from the region and a second one (21) includes a second fan (23) sucking air from the channels (2), whereby the two pipes (15, 21) include a valve means (10) which is placed in the pipes before their connection to the channels (2), which valve means alternatingly opens a flow connection between one of the two pipes (15, 21) and the channels, said valve means (10) being regulated by a timer (33) so that the supply and the discharge of air during the alternating periods are balanced.

6. Arrangement according to claim 5, characterized in that the channels (2) are divided into an even number of groups, half the number of which being connectable alternatively with either of said pipes (15, 21) and the second half of which being connectable with the second one of said pipes (15, 21).

7. Means according to claim 6, characterized in that said valve means includes a four-way valve consisting of a valve housing having four ports (12, 13, 14, 20) and a driven valve body (31), whereby each one of said exhausting pipes (15, 21) is connected to one of said ports (14, 20), respectively, and that each of said two groups are connected to one port, whereby the valve body (31) is driven intermittently to alternately connect the port e.g. (14) of one of said exhausting pipes e.g. (15) with the port e.g. (13) of one of said groups while the port e.g. (20) of the second exhausting pipe e.g. (21) is connected to the port e.g. (12) of the second one of said groups and vice versa.

8. Arrangement according to claim 5, characterized in that the channels (2) have a closeable direct connection (29) to an inlet (26) from the environment via a sucking fan (23).

9. Arrangement according to claim 8, characterized in that said connection (29) includes said sucking fan (23), the sucking side of which is closeable against the channels (2) by said four-way valve (10) and can be connected to the environment by a damper (28), whereby the pressure side of said fan is closeable by means of a valve (24) against the locality and can be connected to the channels via a pipe (29) including a valve (30).

10. Arrangement according to claim 8, characterized in that said four-way valve (10) consists of a valve housing being circular in section and that a driven flap (31) is placed within the valve housing, whereby four ports (12, 13, 14, 20) are placed two and two opposite each other, whereby the flap (31) in a position in front of two ports is closing these two ports but connects two ports being at the same side of the flap.

**Revendications**

1. Procédé de climatisation thermique complète ou partielle d'une zone dans un bâtiment comportant un toit formé d'éléments en forme de dalle, l'air traversant ces éléments entre l'environnement extérieur et la zone, de sorte que les éléments en forme de dalle travaillent comme des échangeurs de chaleur à régénération en ce que l'air usé, avant d'être rejeté à l'environnement, passe de la zone à travers les éléments en forme de dalle pendant une première période prédéterminée, pour le transfert de chaleur de l'air sortant de la zone aux éléments en forme de dalle, et en ce que le flux d'air est inversé de manière à passer de l'environnement extérieur à la zone à travers les éléments en forme de dalle pendant une deuxième période prédéterminée, pour transférer la chaleur des éléments en forme de dalle à l'air entrant dans la zone, caractérisé en ce que l'air, lorsqu'il traverse les éléments en forme de dalle, circule dans une pluralité de canaux parallèles (2) qui sont prévus dans les éléments en béton en forme de dalle, et en ce que, lorsque le flux d'air est dirigé de l'environnement extérieur à la zone, l'air avant d'être conduit dans les canaux traverse un espace étroit (5) qui est défini entre une couche de couverture (7) et une isolation (6) sur les éléments en forme de dalle, de sorte que la quantité d'air dans le local est équilibrée pendant les périodes alternées.

2. Procédé suivant la revendication 1, caractérisé en ce que le flux d'air est divisé de sorte que, lorsque l'air provient de l'intérieur de ladite zone et est évacué de celle-ci par les canaux d'une certaine partie de la structure de toit (1), de l'air est simultanément envoyé de l'environnement dans la zone à travers les canaux d'une deuxième partie de ladite structure de toit, qui est aussi grande que ladite première partie de la structure de toit.

3. Procédé suivant la revendication 1 ou 2, caractérisé en ce que, en plus de la période d'évacuation de l'air usé et de la période de passage d'air venant de l'environnement, les canaux (2) sont parcourus pendant une certaine période courte par de l'air neuf qui est aspiré dans l'environnement et renvoyé à l'environnement, afin de nettoyer les canaux de la saleté qui peut accompagner l'air venant de la zone pendant la première période mentionnée.

4. Procédé suivant l'une quelconque des revendications précédentes, caractérisé en ce que, lorsque l'air est envoyé dans le local par l'intermédiaire des canaux, de l'air est également pris directement dans l'environnement pour être mélangé avec l'air circulant dans les canaux avant que cet air soit envoyé dans la zone.

5. Dispositif de climatisation thermique complète ou partielle d'une zone d'un bâtiment comportant une structure de toit (1) à travers laquelle l'air passe entre l'environnement extérieur et la zone, dans des sens opposés alternés, de sorte que le toit travaille comme un échangeur de chaleur à régénération, suivant la revendication 1, caractérisé en ce que la structure de toit (1) comprend, de façon connue, un espace étroit (5) entre une couche de couverture extérieure (7) et une isolation (6) de la structure de toit, cet espace étroit (5) étant en communication à une extrémité avec l'environnement extérieur, la structure de toit comprenant également, de façon connue, une pluralité de canaux parallèles (2) prévus dans des éléments de dalle en béton pour conduire le flux d'air, ces canaux (2) étant reliés à la zone par des canalisations d'évacuation (15, 21) dont une première (15) comporte un premier ventilateur (17) aspirant l'air dans la zone et une deuxième (21) comporte un deuxième ventilateur (23) aspirant l'air dans les canaux (2), les deux canalisations (15, 21) comportant un organe d'obturation (10) qui est placé dans les canalisations avant leur raccordement aux canaux (2), cet organe d'obturation ouvrant alternativement une communication de fluide entre l'une des deux canalisations (15, 21) et les canaux, cet organe d'obturation (10) étant commandé par une minuterie (33) de sorte que l'admission et l'évacuation d'air pendant les périodes alternées sont équilibrées.

6. Dispositif suivant la revendication 5, caractérisé en ce que les canaux (2) sont divisés en un nombre pair de groupes, dont une moitié peut être reliée alternativement avec l'une quelconque des dites canalisations (15, 21) et dont l'autre moitié peut être reliée à l'autre des dites canalisations (15, 21).

7. Dispositif suivant la revendication 6, caractérisé en ce que l'organe d'obturation comprend une vanne à quatre voies constituée d'un corps de vanne à quatre orifices (12, 13, 14, 20) et d'un élément obturateur commandé (31), de manière à ce que chacune desdites canalisations d'évacuation (15, 21) soit raccordée à l'un desdits orifices (14, 20), respectivement, et en ce que chacun desdits deux groupes est raccordé à un orifice, l'élément obturateur (31) étant commandé par intermittence pour mettre en communication alternativement l'orifice, par exemple (14), de l'une des canalisations d'évacuation, par exemple (15), avec l'orifice, par exemple (13), de l'un desdits groupes, tandis que l'orifice, par exemple (20), de la deuxième canalisation d'évacuation, par exemple (21), est relié à l'orifice, par exemple (12), du deuxième desdits groupes, et vice versa.

8. Dispositif suivant la revendication 5, caractérisé en ce que les canaux (2) ont une liaison directe (29) obturable à une prise (26) dans l'environnement, par l'intermédiaire d'un ventilateur d'aspiration (23).

9. Dispositif suivant la revendication 8, caractérisé en ce que ladite liaison (29) comporte ledit ventilateur d'aspiration (23), dont le côté d'aspiration peut être isolé des canaux (2) par ladite vanne à quatre voies (10) et peut être relié à l'environnement par un volet (28), le refoulement du ventilateur pouvant être isolé du local au moyen d'une vanne (24) et pouvant être raccordé aux canaux par une canalisation (29) comportant une vanne (30).

10. Dispositif suivant la revendication 8, caractérisé en ce que la vanne (10) à quatre voies comprend un corps de vanne de section circulaire et en ce qu'un papillon commandé (31) est placé dans le corps de vanne, quatre orifices (12, 13, 14, 20) étant prévus en opposition deux à deux, de sorte que le papillon (31) dans une position en face de deux orifices ferme ces deux orifices mais connecte deux orifices qui se trouvent du même côté du papillon.

**Patentansprüche**

1. Verfahren zur vollständigen oder teilweisen Wärmeregulierung in einem Bereich eines, ein aus plattenartigen Elementen zusammengesetztes Dach aufweisenden Gebäudes, wobei zwischen der äußeren Umgebung und dem genannten Bereich über diese plattenartigen Elemente Luft bewegt wird, und zwar derart, daß diese Elemente als regenerative Wärmetauscher eingesetzt sind, wobei die verbrauchte Luft von dem genannten Bereich, bevor sie in die Umgebung abgeführt wird, während einer bestimmten ersten Zeitspanne durch die plattenartigen Elemente geführt wird, so daß die dieser Luft innewohnende Wärme auf diese Elemente übertragen wird und wobei während einer bestimmten zweiten Zeitspanne die Luft umgekehrt von der äußeren Umgebung über die plattenartigen Elemente in den genannten Bereich geführt wird, so daß die den plattenartigen Elementen innewohnende Wärme auf die in den genannten Bereich eintretende Luft übertragen wird, dadurch gekennzeichnet, daß die über die plattenartigen Elemente geführte Luft durch eine Anzahl von zueinander parallelen Kanälen (2) strömt, die in die plattenartigen, aus Beton bestehenden Elemente eingeformt sind und daß die von der äußeren Umgebung in den genannten Bereich strömende Luft vor ihrem Eintritt in die Kanäle (2) durch einen engen Raum (5) geführt ist, der zwischen einer Decklage (7) und einer, auf den plattenartigen Elementen befindlichen Isolierschicht (6) gebildet ist, wobei während der aufeinanderfolgenden Zeitspannen die innerhalb des Gebäudes befindliche Luftmenge unverändert ist.

2. Verfahren nach Anspruch 1, dadurch gekennzeichnet, daß die Luftströmungen derart aufgeteilt ist, daß während des Ausströmens derselben aus dem genannten Bereich über die Kanäle (2) eines ersten Teiles der Dachkonstruktion (1) gleichzeitig Luft aus der Umgebung über die Kanäle (2) eines zweiten Teiles der Dachkonstruktion (1) in den genannten Bereich eingeführt wird, wobei beide Teile der Dachkonstruktion (1) eine gleiche Größe aufweisen.

3. Verfahren nach Anspruch 1 oder 2, dadurch gekennzeichnet, daß neben den, dem Abführen von verbrauchter Luft und dem Einführen von frischer Luft aus der Umgebung dienenden Zeitspannen die Kanäle (2) während einer kurzen Zeitspanne von aus der Umgebung angesogener Frischluft durchströmt werden, welche anschließend der Umgebung wieder zugeführt wird, so daß während der zuletzt genannten Zeitspanne die Kanäle (2) von während der zuerst genannten Zeitspannen mit der Luft aus dem genannten Bereich eingebrachtem Schmutz gereinigt werden.

4. Verfahren nach einem der vorangegangenen Ansprüche, dadurch gekennzeichnet, daß beim Einführen von Luft in das Gebäude über die Kanäle (2) auch Luft direkt aus der Umgebung der durch die Kanäle strömenden Luft beigemischt wird bevor diese in das Gebäude gelangt.

5. Vorrichtung zur vollständigen oder teilweisen Wärmeregulierung eines Bereiches eines eine Dachkonstruktion (1) aufweisenden Gebäudes, wobei zwischen der äußeren Umgebung und dem genannten Bereich Luft in wechselnden, einander entgegengesetzten Richtungen geführt wird, so daß das Dach als regenerativer Wärmetauscher eingesetzt ist, entsprechend dem Anspruch 1, dadurch gekennzeichnet, daß die Dachkonstruktion (1) einen an sich bekannten engen Raum (5) zwischen einer äußeren Decklage (7) und einer auf der Dachkonstruktion befindlichen Isolierschicht (6) aufweist, daß der enge Raum (5) an einem Ende mit der äußeren Umgebung in Verbindung steht, daß die Dachkonstruktion (1) in ebenfalls an sich bekannter Weise eine Anzahl paralleler Kanäle (2) zum Führen der Luftströmung aufweist, die in aus Beton bestehende Bauelemente eingeformt sind, daß die Kanäle (2) mit dem genannten Bereich über Absaugrohre (15, 21) in Verbindung stehen, wobei ein erstes Absaugrohr (15) ein erstes Gebläse (17) zum Absaugen von Luft aus dem genannten Bereich und ein zweites Absaugrohr (21) ein zweites Gebläse (23) zum Absaugen von Luft über die Kanäle (2) aufweist, wobei die beiden Absaugrohre (15, 21) ein Ventil (10) aufweisen, welches sich vor deren Verbindung zu den Kanälen (2) befindet, wobei mittels dieses Ventils (10) abwechselnd eine Strömungsverbindung zwischen einem der Absaugrohre (15, 21) und den Kanälen (2) herstellbar ist und wobei das Ventil (14) über ein Zeitrelais (33) dahingehend gesteuert ist, daß die während der aufeinanderfolgenden Zeitspannen in den genannten Bereich eingeführte Luftmenge der aus diesem abgeführten entspricht.

6. Vorrichtung nach Anspruch 5, dadurch gekennzeichnet, daß die Kanäle (2) in eine gradzahlige Anzahl von Gruppen unterteilt sind, wobei die erste Hälfte der Kanäle (2) abwechselnd mit dem einen der beiden Absaugrohre (15, 21) und die zweite Hälfte der Kanäle (2) mit dem anderen der beiden Absaugrohre (15, 21) in Verbindung steht.

7. Mittel nach Anspruch 6, dadurch gekennzeichnet, daß das Ventil (10) ein Vierwegeventil ist, daß das Vierwegeventil ein Ventilgehäuse mit vier Ein- bzw. Ausgängen (12, 13, 14, 20) und einen, mit einem Antrieb versehenen Sperrkörper (31) aufweist, daß jedes der beiden Absaugrohre (15, 21) mit einem der Eingänge (14, 20) in Verbindung steht, daß jede der genannten beiden Gruppen mit einem Eingang des Ventils in Verbindung steht und daß der Sperrkörper (31) diskontinuierlich angetrieben wird, um abwechselnd den, einem der Absaugrohre (15) zugeordneten Eingang (14) mit dem Eingang (13) einer der beiden Gruppen zu verbinden, wobei der dem zweiten Absaugrohr (21) zugeordnete Eingang (20) mit dem Eingang (12) der zweiten Gruppe in Verbindung steht und umgekehrt.

8. Vorrichtung nach Anspruch 5, dadurch gekennzeichnet, daß die Kanäle (2) über ein Sauggebläse (23) eine direkte, verschließbare Verbindung (29) zu einem, in die äußere Umgebung mündenden Einlaß (26) aufweisen.

9. Vorrichtung nach Anspruch 8, dadurch gekennzeichnet, daß die Verbindung (29) das Sauggebläse (23) umfaßt, dessen Saugseite gegenüber den Kanälen (2) über das Vierwegeventil (10) verschließbar und mit der äußeren Umgebung über einen Schieber (28) verbindbar ist, wobei die Druckseite des genannten Gebläses mittels eines Ventils (24) gegenüber dem Gebäude abschließbar und mit den Kanälen (2) über ein, ein Ventil (30) umfassendes Rohr (29) verbindbar ist.

10. Vorrichtung nach Anspruch 8, dadurch gekennzeichnet, daß das Vierwegeventil (10) aus einem im Querschnitt kreisförmigen Ventilgehäuse besteht, daß innerhalb des Ventilgehäuses ein antreibbarer Sperrkörper (31) angeordnet ist, wobei vier Ein- bzw. Ausgänge jeweils paarweise einander gegenüberstehend angeordnet sind und wobei der sich vor zwei Eingängen befindliche Sperrkörper (31) diese verschließt, jedoch die auf der gleichen Seite desselben befindlichen Eingänge miteinander verbindet.

0 034 146